**Europäisches Patentamt**

**European Patent Office**

**Office européen des brevets**

(19)

(11) Veröffentlichungsnummer: **0 039 866**
**A2**

(12) # EUROPÄISCHE PATENTANMELDUNG

(21) Anmeldenummer: **81103341.4**

(22) Anmeldetag: **04.05.81**

(51) Int. Cl.³: **C 01 G 49/00**
**C 01 B 17/00**

(30) Priorität: **13.05.80 DE 3018192**

(43) Veröffentlichungstag der Anmeldung:
**18.11.81 Patentblatt 81/46**

(84) Benannte Vertragsstaaten:
**AT BE CH DE FR GB IT LI NL SE**

(71) Anmelder: **BAYER AG**
**Zentralbereich Patente, Marken und Lizenzen**
**D-5090 Leverkusen 1, Bayerwerk(DE)**

(72) Erfinder: **Schultz, Karl-Heinz, Dr.**
**Deswatinesstrasse 61**
**D-4150 Krefeld(DE)**

(72) Erfinder: **Dobbers, Jürgen, Dr.**
**Carl-Rumpff-Strasse 51**
**D-5090 Leverkusen 1(DE)**

(54) **Verfahren zur Spaltung von Eisensulfaten und Schwefelsäure und Verwendung von Gummiabfällen dazu.**

(57) Die vorliegende Erfindung betrifft ein Verfahren zur Spaltung von Eisensulfaten, die gegebenenfalls noch Hydratwasser enthalten, und Schwefelsäure unter Energiezufuhr, wobei vor und/oder während der Spaltung Gummiabfälle zugesetzt werden sowie die Verwendung von Gummiabfällen zur Spaltung von Eisensulfaten und Schwefelsäure.

EP 0 039 866 A2

0039866

BAYER AKTIENGESELLSCHAFT        5090 Leverkusen, Bayerwerk
                                Je/bc/c
Zentralbereich
Patente, Marken und Lizenzen


Verfahren zur Spaltung von Eisensulfaten und Schwefelsäure und Verwendung von Gummiabfällen dazu
_____

Gegenstand der vorliegenden Erfindung ist ein Verfahren
zur Spaltung von Eisensulfaten, die gegebenenfalls noch
Hydratwasser enthalten und Schwefelsäure unter Zusatz
von Gummiabfällen.

Bei der Herstellung von Titandioxid nach dem Sulfatverfahren fällt Eisensulfat-Heptahydrat in großen Mengen an. Dieses sogenannte Grünsalz, welches noch anhaftende Schwefelsäure enthält, wird zum überwiegenden
Teil durch Spaltung in Eisenoxid und Schwefeldioxid
aufgearbeitet. Eisenoxid kann weiterverarbeitet oder
deponiert werden, Schwefeldioxid wird weiterverarbeitet,
z.B. in einer Schwefelsäureproduktionsanlage. Bei der
Spaltung von Eisensulfat bzw. Schwefelsäure bzw. von
Eisensulfat mit anhaftender Schwefelsäure zum Zwecke
der Wiederverwertung des Schwefelanteils wird Energie
verbraucht. Es ist bekannt, diese zumindest z.T. in
Form von Schwefel oder Kohle zuzuführen. Der vorliegende Vorschlag geht dahin, zumindest einen Teil dieser Energieträger durch Gummiabfälle zu ersetzen.

Die Gummiabfall- und insbesondere Altreifenverwertung

Le A 20 212 - Ausland

stellt ein immer aktuelleres Problem dar. In Deutschland werden nur ca. 30 % der anfallenden Altreifen der Runderneuerung zugeführt. Zur Zeit fallen über ca. 250 000 t Altreifen an, die anderweitig verwertet werden müssen, im wesentlichen werden sie deponiert. In einem Artikel über die Pyrolyse von Altreifen in Chem. Ing. Techn., 48. Jahrgang, 1976, Nr. 5, S. 443 bis 447, werden die Probleme der Altreifenverwertung aufgezeigt. Nach einer Veröffentlichung des Bundesministeriums des Inneren von 1979 treten bei der Verbrennung von Altreifen besondere Schwierigkeiten auf. Der Reifengummi besteht nämlich zu etwa 95 % aus Kohlenwasserstoffen, 2 % Schwefel und 2,5 % Zinkoxid. Diese Zusammensetzung erfordert eine besondere Behandlung der bei der Verbrennung entstehenden Gase. Insbesondere sind wegen der starken Rußentwicklung gute Staubabscheidevorrichtungen erforderlich.

Desweiteren ist bekannt, Altreifen zu verbrennen und die gewonnene Energie z.B. zur Dampferzeugung auszunutzen.

Überraschenderweise wurde nun festgestellt, daß sich unter besonderen Bedingungen Altreifen bei der Spaltung von Eisensulfaten und/oder Schwefelsäure einsetzen lassen, ohne daß die befürchtete starke Rußbildung auftritt und daß gleichfalls der Schwefelgehalt der Reifen sinnvoll ausgenutzt werden kann. Überraschenderweise bewirkt auch der Stahlgehalt der Reifen kein Problem.

Gegenstand der vorliegenden Erfindung ist daher ein Verfahren zur Spaltung von Eisensulfaten, die gegebenenfalls noch Hydratwasser enthalten und/oder Schwefelsäure unter Energiezufuhr, welches dadurch gekennzeichnet ist, daß den zu spaltenden Stoffen Gummiabfälle, insbesondere Altreifen, vor und/oder während der Spaltung zugesetzt werden.

Bei dem vorliegenden Verfahren ist es möglich, die Gummiabfälle, insbesondere die Altreifen, direkt in vorzugsweise zerkleinerter Form den zu spaltenden Stoffen zuzusetzen oder auch direkt in die Brennkammer einzutragen.

Eisensulfat wird üblicherweise im Wirbelbett oder auch in Etagenöfen, sogenannten Humboldt-Öfen, gespalten. Prinzipiell sind zur Durchführung des erfindungsgemäßen Verfahrens alle derartigen Öfen geeignet, vorzugsweise werden jedoch Etagenöfen eingesetzt, da dann die Gummiabfälle nicht so stark zerkleinert werden müssen. Vorzugsweise werden die zerkleinerten Gummiabfälle einer oder mehreren Etagen des Ofens zugeführt.

Pro 100 t Grünsalz werden üblicherweise zwischen ca. 15 und ca. 25 t Schwefel zugebrannt sowie ca. 5 t Heizöl. In der bevorzugten Ausführungsform des erfindungsgemäßen Verfahrens wird zumindest ein Teil des Schwefels und/oder des Heizöls durch Gummiabfälle, vorzugsweise Altreifen, ersetzt. Je nach Zusammensetzung der zu spaltenden

Le A 20 212

- 4 -

Stoffe können bis zu 90 % des üblicherweise verwendeten Brennstoffs ersetzt werden. Besonders bevorzugt werden ca. 10 t Schwefel stündlich durch 1 bis 5, vorzugsweise 2 bis 4 t, Altreifen ersetzt. In einer speziellen Verfahrensweise werden den zu spaltenden Stoffen bis 40 Gew.-% Schwefel und/oder Kohle und 5 bis 35 Gew.-% Gummiabfälle zugesetzt.

Die Verwendung von Gummiabfällen, insbesondere Altreifen, als Energiequelle bei der Spaltung von gegebenenfalls noch Hydratwasser enthaltenden Eisensulfaten und/oder Schwefelsäuren ist daher ein weiterer Gegenstand der vorliegenden Erfindung.

Überraschenderweise verzundern auch die in den Altreifen enthaltenden Stahldrähte vollständig in der Brennkammer. Die erwartete Rußbildung tritt nicht auf. Das in den Reifen enthaltene Zinkoxid wird mit dem Rückstand abgeschieden.

Das vorliegende Verfahren soll durch die nachfolgenden Beispiele noch näher erläutert werden.

Le A 20 212

- 5 -

**0039866**

## Beispiel 1   (Vergleichsbeispiel)

Stündlich wurden 4 t Eisensulfatmonohydrat mit 2,8 % anhaftender Schwefelsäure einem Humboldt-Ofen mit 9 Etagen zugeführt. Die Spaltung der Sulfate erfolgte bei einer Temperatur von ca. 840 bis 880°C. Zur Energiezufuhr wurden 0,75 t Schwefel und 0,18 t Heizöl stündlich verbrannt. Das Abgas enthielt 14 Vol.-% $SO_2$ und Feststoffe, die in Staubabscheidern abgeschieden wurden.

## Beispiel 2

Beispiel 1 wurde analog durchgeführt, nur anstelle von 0,75 t Schwefel wurden stündlich 0,28 t zerkleinerte Altreifen zugesetzt. Das Abgas enthielt 8 Vol.-% $SO_2$, eine Rußentwicklung trat nicht auf.

## Beispiel 3

Entsprechend Beispiel 2 wurden anstelle von 0,75 t Schwefel und 0,18 t Heizöl pro Stunde 0,40 t Altreifen und 0,42 t Schwefel und kein Heizöl verbrannt. Das Abgas enthielt 12 Vol.-% Schwefeldioxid, eine Rußentwicklung trat nicht auf.

## Beispiel 4

Pro Stunde wurden 4 t Eisensulfatmonohydrat mit anhaftender Schwefelsäure unter Zufuhr von 0,55 t Altreifen bei einer Temperatur zwischen ca. 860 und 900°C verbrannt. In dem Ofen trat eine leichte Rußbildung auf, der Ruß konnte jedoch in den Abscheidern problemlos aufgefangen werden. Das Abgas enthielt 8 Vol.-% Schwefeldioxid.

Le A 20 212

0039866

Patentansprüche

1) Verfahren zur Spaltung von Eisensulfaten, die gegebenenfalls noch Hydratwasser enthalten und/oder Schwefelsäure unter Energiezufuhr, dadurch gekennzeichnet, daß vor und/oder während der Spaltung Gummiabfälle zugesetzt werden.

2) Verfahren nach Anspruch 1, dadurch gekennzeichnet, daß als Gummiabfälle Altreifen eingesetzt werden.

3) Verfahren nach Anspruch 1 oder 2, dadurch gekennzeichnet, daß Gummiabfälle in zerkleinerter Form in Mengen bis zu 90 Gew.-% des Brennstoffes zugesetzt werden.

4) Verfahren nach einem oder mehreren der Ansprüche 1 bis 3, dadurch gekennzeichnet, daß den zu spaltenden Stoffen bis 40 Gew.-% Schwefel und/oder Kohle und 5 bis 35 Gew.-% Gummiabfälle zugesetzt werden.

5) Verwendung von Gummiabfällen bei der Spaltung von Eisensulfaten, die gegebenenfalls noch Hydratwasser enthalten und/oder Schwefelsäure.

6) Verwendung von Altreifen zur Spaltung von Eisensulfaten, die gegebenenfalls noch Hydratwasser enthalten und/oder Schwefelsäure.

7) Verwendung von Gummiabfällen, insbesondere Altreifen, im Gemisch mit Schwefel und/oder Kohlen zur Spaltung von Eisensulfaten, die gegebenenfalls noch Hydratwasser enthalten und/oder Schwefelsäure.

Le A 20 212